# EUROPEAN PATENT APPLICATION

(11) **EP 4 790 624 A1**
(43) Date of publication of application: **12.08.2026**
(21) Application number: 26157712.6
(22) Date of filing: 10.02.2026
(51) Int. Cl.: G06Q 20/40

(54) **SYSTEMS AND METHODS FOR PERSON TO PERSON IDENTITY PROOFING AND SECURE MARKETPLACE**

(30) Priority: 10.02.2025 US 202563756678 P; 09.02.2026 US 202619534197
(71) Applicant: JPMorgan Chase Bank, N.A., New York, NY 10179 (US)
(72) Inventor: SCHUBERT, Stefan, New York, 10179 (US); RADHAKRISHNAN MANOHARAN, Manoj Kumar, New York, 10179 (US); REDDY, Anilkumar, New York, 10179 (US); KUMAR, Vikash, New York, 10179 (US); SETHI, Rahul, New York, 10179 (US); SHILLING, Matthew, New York, 10179 (US)
(74) Representative: Patentanwälte Olbricht Buchhold Keulertz

(57) **Abstract**

In some embodiments, the techniques described herein relate to a method including: receiving, by a sender electronic device, a request for a transaction and/or one or more transaction details, receiving, by the sender electronic device, an identification of a recipient, receiving, by a recipient electronic device, information details from the recipient, receiving, by the recipient electronic device, an identification such as a picture identification (e.g., driver's license, passport) from the recipient, receiving, by a recipient electronic device, a liveliness check from the recipient, providing, by a computer program executed by a financial backend, sender account details if the recipient identity is determined, providing, by the computer program executed by the financial backend, a proposed action to the recipient, and storing, by the computer program executed by the financial backend, the verified identity of the recipient on a memory accessible to the financial backend.

## Description

### RELATED APPLICATIONS

This application claims priority to, and the benefit of, U.S. Provisional Patent Application Ser. No. 63/756,678, filed February 9, 2025, the disclosure of which is hereby incorporated, by reference in its entirety.

### BACKGROUND

### 1. Field of The Disclosure

Embodiments generally relate to systems and methods for identity proofing.

### 2. Description of the Related Art

Conventional peer-to-peer transfer platforms typically authenticate only the sender and assume that the recipient details provided by the sender are accurate and current. In these models, recipient validation is limited to superficial checks such as format verification of account numbers or confirmation that an identifier exists within an internal directory. These checks do not establish that the recipient is the intended individual, that the recipient consents to receive funds, or that the recipient information has not been altered in transit. Attackers may exploit this gap by inducing senders to enter look-alike handles, near-miss account numbers, or cloned profiles designed to pass lightweight validation. Even where a platform displays a recipient name, the name may be stale, spoofed, or mismatched to the underlying payment endpoint, resulting in misdirected transfers that are difficult to recover once settled.

Social engineering and account takeover further compound the risk. Fraudsters may impersonate trusted contacts using compromised messaging accounts, caller identification ("ID") spoofing, or overlay applications that present counterfeit payment screens. Unsuspecting users may be pressured to "verify" small deposits, to move funds urgently, or to accept revised recipient details that bypass prior safeguards. Meanwhile, mule networks may launder proceeds by repeatedly updating recipient contact points and payment instruments to evade detection. Absent strong recipient proofing, platforms may be unable to differentiate legitimate requests from orchestrated scams, particularly when a sender is asked to confirm a payment.

Human error remains a persistent source of loss. Transposition mistakes in routing and account numbers, confusion between similar usernames, and inadvertent selection of an incorrect contact from a device address book may cause transfers to be sent to unintended parties. This risk is heightened on mobile devices with limited screen real estate and auto-complete features that may favor recently used contacts over true intended recipients. Recovery options are limited once funds are posted, and even reversible instruments may require time-consuming support interactions that degrade user trust and increase operational burden.

Existing systems also lack robust mechanisms to establish that a recipient is a real person interacting live at the time of verification. Static images and previously captured videos may be used to satisfy rudimentary identity checks, enabling presentation attacks that bypass document verification. Moreover, many platforms do not bind verified identity artifacts to strong, device-bound credentials, permitting subsequent reuse of recipient endpoints by unrelated individuals or by compromised devices without revalidation. As a result, a one-time verification may not provide durable assurance for future transfers.

Privacy and compliance considerations introduce additional constraints. Over-collection of sensitive artifacts, such as full document images and unredacted personal details, may increase exposure in the event of breach and may conflict with data minimization principles. At the same time, financial institutions must satisfy regulatory requirements that demand reliable identity evidence and auditability of verification actions. Current approaches often trade security for convenience or store artifacts without tamper-evident controls, making post-hoc investigations difficult and undermining confidence in remediation.

Accordingly, there is a need for improved person identification tailored to person-to-person transfers that reduces uncertainty at the point of payment, mitigates theft and seams through strong recipient proofing, and lowers human error by providing verifiable feedback before funds are sent. In particular, systems that collect and validate multi-factor evidence from the recipient, assess liveliness to defeat presentation attacks, cryptographically bind the proven identity to device credentials for reuse, and disclose only the minimum necessary attributes while maintaining tamper-evident records may address the deficiencies of conventional platforms and enhance safety for all users, including those who are inexperienced, elderly, or otherwise vulnerable.

### SUMMARY

Exemplary embodiments provide systems and methods for identity proofing. According to one embodiment, a method may include receiving, by a sender electronic device, a request for a transaction and/or one or more transaction details, receiving, by the sender electronic device, an identification of a recipient, receiving, by a recipient electronic device, information details from the recipient, receiving, by the recipient electronic device, an identification such as a picture identification (e.g., driver's license, passport) from the recipient, receiving, by a recipient electronic device, a liveliness check from the recipient, providing, by a computer program executed by a financial backend, sender account details if the recipient identity is determined, providing, by the computer program executed by the financial backend, a proposed action to the sender, and storing, by the computer program executed by the financial backend, the verified identity of the recipient on a memory accessible to the financial backend.

Disclosed is a computer-implemented method in which a sender electronic device may receive a transaction request and transaction details along with an identification of a recipient, a recipient electronic device may collect identity evidence from the recipient including information details, a picture identification, and/or a liveliness check, and a financial backend may verify the recipient's identity based on the collected artifacts, may provide sender account details upon determining the recipient's identity, may provide a proposed action to the sender, and may store a proven identity in memory accessible to the backend for future use.

In some embodiments, the method may capture identification images and perform optical character recognition to extract data fields, conduct randomized gesture-based liveness checks analyzed by machine learning, and/or perform facial matching against an identification portrait subject to a similarity threshold. The method may present transaction inputs and proposed actions via a mobile application interface, compute and present sender account details, fees, and/or estimated settlement time, and/or apply transport layer security and public-key encryption to protect artifacts in transit. The method may further generate signed, tamper-evident audit records with timestamps, geolocation, and/or cryptographic hashes and may store such records in append-only or distributed-ledger systems. Additionally, the method may compute a fraud risk score from device fingerprints, security and/or intellectual property reputation, velocity signals, and/or geolocation consistency to inform proposed actions, may read e-passport chip data via near field communication and verify public key infrastructure signatures, may issue challenge-response prompts for liveliness, and/or may cross-validate extracted data against third-party sources. The verified identity may be associated with a recipient profile identifier to enable reuse with reduced verification in subsequent transactions.

Embodiments consistent with the present disclosure include a system including one or more processors and one or more storage devices storing instructions that when executed by one or more processors, cause the processor to perform one or more steps of the methods disclosed herein. Embodiments consistent with the present disclosure include a computer processing system, computer, or server, including: a memory configured to store instructions such as a non-transitory computer-readable storage medium; and a hardware processor operatively coupled to the memory for executing the instructions to perform one or more steps of the methods disclosed herein.

### BRIEF DESCRIPTION OF THE DRAWINGS

In order to facilitate a fuller understanding of the present disclosure, reference is now made to the attached drawings. The drawings should not be construed as limiting the present disclosure but are intended only to illustrate different Embodiments and embodiments.
FIG. 1 is a block diagram of a system for identity proofing, in accordance with embodiments.
FIGs. 2A-2B are methods for identity proofing, in accordance with embodiments.
FIG. 3 is a block diagram of a computing device for implementing certain Embodiments of the present disclosure.

### DETAILED DESCRIPTION

Embodiments generally relate to systems and methods for identity proofing.

In accordance with embodiments, systems and methods may include receiving, by a sender electronic device, a request for a transaction and/or one or more transaction details, receiving, by the sender electronic device, an identification of a recipient, receiving, by a recipient electronic device, information details from the recipient of the identity of the recipient, receiving, by the recipient electronic device, an identification such as a picture identification ("ID") (e.g., driver's license, passport) from the recipient, receiving, by a recipient electronic device, a liveliness check from the recipient, providing, by a computer program executed by a financial backend, sender account details if the recipient identity is determined, providing, by the computer program executed by the financial backend, a proposed action to the sender, and storing, by the computer program executed by the financial backend, the verified identity of the recipient on a memory accessible to the financial backend.

Disclosed coordinated systems and methods may include recipient identity verification integrated into a financial transaction workflow. A sender may initiate a transaction on a user device, while the recipient may complete identity proofing on a recipient device by providing one or more of government-issued ID images, demographic information, and performing a liveness check. A financial backend may analyze the submitted artifacts using optical character recognition ("OCR"), facial matching against ID portraits, and/or liveness detection, optionally may cross-validate data with trusted sources and may compute a fraud risk score. Secure communications and encryption may protect artifacts in transit and at rest. Verified identities may be recorded as signed, tamper-evident audit entries with timestamps, geolocation, and cryptographic hashes, and/or may be stored as reusable, device-bound credentials to streamline future transactions. The backend may provide sender account details and/or may propose actions (e.g., approve, modify, request more verification) based on verification outcomes and risk assessment, enabling secure, efficient recipient onboarding and transaction authorization.

In one embodiment, the proven identity may be decomposed into granular attributes that may be stored as encrypted identity objects protected by attribute-based encryption policies. A root record may reference a decentralized identifier for the recipient and/or may include a cryptographic binding to a hardware-backed device key, while each attribute object may be content-addressable via its hash and may be linked in a directed acrylic graph ("DAG") for tamper-evidence. Upon successful verification, the backend may issue a verifiable credential signed with the institution's issuer key, which may encapsulate selective-disclosure commitments so future queries may reveal only necessary fields. The database may persist the encrypted attribute objects, the verifiable credential, and a policy index mapping transaction classes to access predicates. When a transaction may require identity attributes, the recipient device may perform a challenge-response using the device-bound key to derive a short-lived capability token bound to the request context, and the backend may prove authorization against the policy index and may return only the minimum necessary attributes verified via credential signatures. Optional zero-knowledge proofs may be generated from selective-disclosure commitments to allow compliance checks without full data exposure, which may provide strong device binding, minimal disclosure, cryptographic auditability, flexible policy enforcement, and/or privacy-preserving verification.

In one embodiment, an identity artifact(s) may be stored as an immutable blob(s) addressed by cryptographic hashes, while a per-recipient identity ledger may maintain an append-only sequence of state transitions organized in a hash tree and/or may be anchored periodically to a trusted timestamping service. An (e.g., each) entry may be signed with forward-secure signatures that may enable key rotation without compromising past entries. New verification events may create state deltas appended to the ledger, and a parallel disclosure index may store redacted views of entries with field-level commitments for selective disclosure. The ledger root hash and a compact audit proof may be recorded in a compliance register for external attestation. Consumers may request a specific disclosure profile, and the backend may compile a minimal set of redacted blobs referenced by their hashes, may return them with a verification proof using a hash tree from the ledger root, and/or may verify the forward-secure signatures. Only committed fields relevant to the profile may be disclosed, while others may remain as non-revealing commitments, and expired or superseded entries may be excluded via ledger state rules to ensure the freshest valid identity view. This approach may deliver strong tamper-evidence, efficient audit proofs, minimal necessary disclosure, resilience to key rotations, and clean lineage of identity changes.

In one embodiment, the proven identity may be encrypted using a threshold public key scheme and may be split across multiple regional shards, while non-sensitive indices may be stored centrally and sensitive payloads may exist only as threshold-encrypted shards plus integrity tags. Upon verification, the backend may generate a policy-bound encryption context and may encrypt an (e.g., each) attribute with unique, context-derived keys, distributing shares to storage nodes that may attest to running in trusted execution environments. A global policy service may record quorum rules and may bind them to the recipient's profile. A transaction request may trigger policy evaluation, and if permitted, a short-lived reconstruction session may be established in which trusted execution environments ("TEE")-attested nodes may perform partial decryptions to reconstruct only the needed attributes inside the backend's TEE. The backend TEE may run applications in a secure enclave of the backend where code and/or data are protected from external threats, do not release secure information, and/or do not effect external systems. The plaintext may not leave the enclave. The backend may return derived attestations and/or redacted fields, where results may be sealed with enclave keys and/or may be tagged to the transaction context to prevent replay for other purposes. This design may provide strong geographic and organizational separation, enclave-confined plaintext handling, fine-grained purpose limitation, and/or robust compliance with data residency and minimization requirements.

A computer system comprising a sender electronic device, a recipient electronic device, and a financial backend may implement a secure, device-bound identity proofing pipeline that may improve computer security and integrity of networked transactions. The financial backend may execute instructions on one or more processors to establish a hardware-rooted session, wherein a secure enclave of the recipient electronic device may generate a device attestation that may bind a verified identity to a non-exportable key. The recipient electronic device may capture an identification document image and a liveness video stream, and a feature extraction module executing on the backend may transform the raw artifacts into compact embeddings using convolutional neural network layers that may be quantized to reduce memory footprint and/or processor cycles. A verification engine may compute similarity scores between the document portrait embedding and one or more live frames, may evaluate randomized challenge-response signals for liveness, and/or may fuse the signals with demographic consistency checks using a calibrated threshold that may minimize false accepts and false rejects under observed network latency and camera quality.

The backend may encrypt artifacts in transit using a transport layer security channel and may encrypt at rest using authenticated encryption with associated data, where associated data may include a transaction identifier and a device attestation token to prevent replay across sessions. The backend may further generate a tamper-evident record comprising a cryptographic hash chain over normalized fields, timestamps, and/or geolocation metadata, and/or may append the record to an append-only storage structure that may be periodically anchored to a trusted timestamping service to provide verifiable integrity.

In some embodiments, the system may provide selective disclosure of identity attributes through a verifiable credential that may be signed by the backend and/or may contain commitments enabling zero-knowledge proofs for policy checks, such as proof of age or residency, without disclosing full personal data. A policy interpreter may evaluate a transaction context comprising sender identifier, risk tier, jurisdiction, and/or device reputation, and/or may derive a short-lived capability token from the device-bound key that may authorize decryption of only the minimal attributes required for the operation. A threshold cryptography subsystem may split sensitive payloads across multiple storage nodes and/or may reconstruct attributes inside a backend secure enclave only upon satisfying quorum rules and policy predicates, thereby ensuring plaintext may remain confined to a trusted execution boundary.

In some embodiments, a fraud detection model may compute a risk score from device fingerprints, network telemetry, and/or velocity features and may dynamically adjust verification prompts and disclosure scope to reduce computational load during low-risk events and to increase scrutiny during high-risk events, which may improve throughput and resilience against automated attacks. By binding proven identity to hardware credentials, by enforcing tamper-evident storage and selective disclosure, and/or by performing enclave-confined reconstruction of sensitive attributes, the system may provide a specific, technical improvement to computer network security and data integrity that may be rooted in cryptography, trusted hardware, and/or optimized machine learning inference.

The risk score may be accumulated and calculated from device fingerprints, network telemetry, and/or velocity features that may be collected during recipient identity proofing and transaction initiation. The financial backend may ingest device fingerprint attributes such as operating system version, hardware identifiers, sensor availability, and/or cryptographic attestation signals, and may correlate these with network telemetry that may include security and/or intellectual property reputation, autonomous system ownership, latency and jitter profiles, and/or geolocation consistency across sessions associated with the device. The backend may derive velocity features that may track frequencies of recipient additions, rapid changes to contact points and/or bank details, and/or bursts of transaction attempts within constrained time windows. Using these inputs, the model may produce a calibrated risk score that may be bound to the transaction context and/or the device-bound credential. Based on the score, the backend may dynamically adjust verification prompts by, for example, reducing to a minimal liveness gesture and/or selective field disclosure during low-risk events, and/or escalating to multi-gesture liveness, document chip verification via near field communication, and/or broader cross-validation against third-party sources during high-risk events.

The backend may adjust disclosure scope by limiting decrypted attributes to those necessary for policy satisfaction when risk may be low, and/or by expanding the set of reviewed attributes under strict policy and logging when risk may be high. These adaptations may reduce computational load and bandwidth consumption during benign activity while increasing scrutiny and containment during suspicious activity, which may improve end-to-end throughput and/or may enhance resilience against automated attacks and scripted account abuse.

The benefits of disclosed systems include providing a user with additional checks from recipient tests to ensure the recipient is the intended target of a transaction of an asset or funds, enabling more secure transactions and/or higher value transactions. The technical solution is a series of potential tests determined and selected and operated by a computer program, without requiring a sender or user to determine an identity of the recipient.

The disclosed technology provides a robust, end-to-end identity proofing and transaction authorization architecture that materially improves security, reliability, and operational efficiency over conventional recipient verification practices. By combining multi-factor document verification, biometric liveliness assessment, and/or data consistency checks in a coordinated workflow between a sender electronic device, a recipient electronic device, and a financial backend, the system may reduce the probability of successful presentation attacks and identity spoofing while minimizing false positives and/or false negatives. In particular, the liveliness check that may include randomized, challenge-response prompts and video analysis mitigates static image and replay-video attacks, while facial matching across identification document portraits and live capture frames may enforce a similarity threshold that is resilient to three-dimensional mask exploits and/or low-quality image artifacts. The incorporation of optical character recognition for government-issued identification and cross-validation against trusted sources enhances data fidelity and/or reduces manual review burden.

End-to-end cryptographic protections offer substantive technical benefits in confidentiality and integrity. Transport layer security channels protect session data in transit, and encryption of identification artifacts with public keys associated to the financial backend prevents unauthorized intermediaries from accessing sensitive content. The generation of signed records with timestamps, geolocation context, and/or cryptographic hashes of artifacts creates tamper-evident audit trails that improve post-hoc traceability and evidentiary reliability. When stored in an append-only medium such as a distributed ledger or write-once storage, the signed records may resist unauthorized modification, supporting secure compliance reporting and forensic analysis.

The system's adaptive risk-based decisioning may increase trust while preserving user experience. A machine learning fraud risk score computed from device fingerprints, intellectual property reputation, velocity checks, and/or geolocation consistency enables dynamic selection of proposed actions, thereby focusing friction where risk is elevated and streamlining low-risk transactions. In some embodiments, the recipient electronic device may select the proposed action based on the machine learning fraud risk score. The recipient electronic device may send the selected proposed action to the sender electronic device for execution. This targeted friction may reduce overall latency and abandonment while maintaining strong protection against account takeover and/or mule activity. Moreover, near field communication reading of e-passport chips and verification via a public key infrastructure chain may provide cryptographically anchored document authenticity, reducing reliance on easily forged physical features and/or improving cross-border interoperability.

A reusable identity construct tied to device-bound credentials may deliver measurable performance and usability gains. By securely associating a proven identity to strong, hardware-backed credentials on the recipient device, subsequent transactions may leverage prior verification to reduce repetitive capture steps, network bandwidth consumption, and/or processing time, while maintaining assurance through cryptographic binding and/or periodic revalidation. This approach may limit exposure of raw identity artifacts by substituting attestations for full document resubmission, thereby improving privacy posture.

Operationally, the architecture may scale efficiently across heterogeneous devices and networks. Clear role separation between the sender device, recipient device, and/or financial backend may reduce coupling and enables independent performance optimization. Standardized interfaces for artifact ingestion and verification services may facilitate modular deployment, load balancing, and/or horizontal scaling of compute-intensive tasks such as facial matching and OCR. The result may be improved throughput under peak demand with predictable resource utilization.

Collectively, disclosed technical improvements provide stronger resistance to fraud, higher verification accuracy, lower end-to-end latency, enhanced data integrity and auditability, better privacy and confidentiality of sensitive artifacts, and/or an adaptable user experience that scales in production environments while meeting stringent security and compliance requirements.

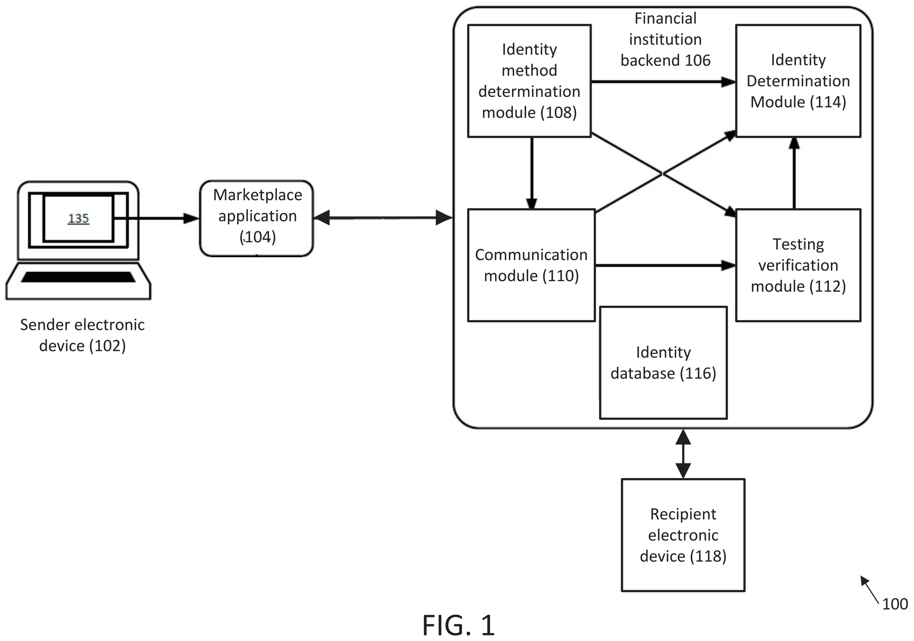

FIG. 1 is a block diagram of a system for identity proofing, in accordance with embodiments. System 100 includes a sender electronic device 102 executing a marketplace application 115 available through a user interface 135, a financial institution backend 106 executing one or more software modules, and a recipient electronic device 118. The one or more software modules may include an identity method determination module 108, a communication module 110, a testing verification module 112, and an identity determination module 114. The financial institution backend 106 may include an identity database 116.

In accordance with embodiments, sender electronic device 102 may be a user electronic device such as a personal communication device (e.g., pad, phone), computer workstation, laptop, or other electronic processing device in operative communication with, e.g., marketplace application 104 and/or financial institution backend 106. Sender electronic device 102 may be configured to interact with processing application 104 through user interface 135. For instance, user device 102 may include a client application that allows a user of sender electronic device 102 to interact with marketplace application 104. User interface 135 may include one or more graphical user interfaces to receive inputs and/or display information to the user. User interface 135 and/or marketplace application 104 may comprise one or more instructions executed by one or more processors of sender electronic device 102. Marketplace application 104 may be a production business application provided by a service organization. In an exemplary aspect, marketplace application 104 may be a payment processing application or system.

In accordance with embodiments, a user of sender electronic device 102 may attempt to process a transaction of an asset or money of an electronically-managed account. The transaction may be intended for a recipient. In some embodiments, the sender and/or the recipient may be individuals or organizations.

Interface 135 may be any suitable interface for receiving send and/or sender information from sender electronic device 102, marketplace application 104, or another application. For instance, interface 135 may be a graphical user interface, an application programming interface ("API"), an event streaming platform API, etc.

In accordance with embodiments, recipient and/or transaction information received via interface 135 may be sent to and/or stored in a memory associated with financial institution backend 106. The received sender and/or transaction information may be kept temporarily until a recipient is verified/determined and/or a transaction is completed. The memory may be any suitable memory for storing data.

In some embodiments, identity method determination module 108 may determine a method to verify a recipient data. The determination may be made based on the sender information received from the sender electronic device. For example, if a phone number is received, a link for a mobile application may be sent to the phone number through SMS to verify the phone number, verify the recipient is associated with the phone number, verify a demographic of the recipient, verify an address of the entity, verify an identity of the recipient, verify an identification (e.g., driver's license) of the recipient, and/or verify a liveliness and/or a responsiveness of the recipient. As another example, if an email for the recipient is received, a link may be provided to the recipient to request a mobile number or to provide email options such as a captcha, a scan of an identification, or a single use passcode to verify on a different device and/or through a different contact method (e.g., phone call, account login).

The selection of the proposed action may be driven by a decisioning engine executing on the financial backend and may be presented to the sender electronic device through a transaction application interface. Upon receipt of a transaction request and/or recipient identification, the backend may assemble a decision context comprising the transaction details (e.g., amount, currency, destination), the sender profile and device attestation, recipient identity verification outcomes (e.g., document checks, facial similarity, liveliness results), and/or a fraud risk score derived from device fingerprints, network telemetry, and/or velocity features. The engine may evaluate policy rules and machine-learned models against this context and/or may compute an action vector that may include candidates such as approve, approve with conditions, request additional verification, modify transaction details, hold for review, and/or reject. Each candidate may be scored based on rule satisfaction, model confidence, and/or regulatory constraints, and a top-ranked action may be selected when its score may surpass an action threshold; otherwise, the engine may select a fallback, such as request additional verification and/or hold for review.

Implementation may rely on a modular architecture in which a policy interpreter may execute deterministic rules (e.g., thresholds for verification confidence, sanction list clearance, and/or transaction limits), while a model inference service may compute probabilistic risk from behavioral features. A feature pipeline may normalize inputs and/or may generate derived signals, such as geolocation consistency, document freshness, and/or device reputation, which may be cached with short time-to-live to reduce repeated computation. The decisioning engine may fuse rule outputs and model scores using a calibrated combiner that may apply weightings and/or may enforce hard constraints (for example, do not approve if document authenticity may be uncertain or if liveness may be below minimum). The engine may then construct a proposed action payload containing the selected action, rationale codes, confidence levels, and/or any required follow-up prompts or data requests. The sender electronic device may receive the selected proposed action payload over a secure transport layer security channel, and/or the transaction application may render the action within its user interface.

For a selected action, the interface may display a confirmation panel with summarized recipient details and/or a single-tap approval control; for approve with conditions, the interface may present the conditions (e.g., reduced limit and/or delayed settlement) and/or may request consent; for request additional verification, the interface may present guided prompts to the recipient (e.g., relayed via secure messaging) and/or may request the sender to confirm specific details; for modify transaction details, the interface may highlight fields that may require correction and/or may provide inline editing; and/or for hold or reject, the interface may display reasons and next steps. A sender's response may be captured and may be signed using an application key bound to the device attestation, and/or the selection may be transmitted back to the backend, where a confirmation service may validate the signature, may log the event to a tamper-evident audit store, and/or may advance the transaction state machine accordingly.

To ensure resilience and traceability, the backend may implement idempotent action handling via transaction identifiers and/or vector clocks, so repeated and/or out-of-order responses may be reconciled without duplication. The decisioning engine may emit telemetry that may include action scores, rule hits, and/or model confidences, which may be used to recalibrate thresholds and to retrain models over time. Privacy controls may limit attribute disclosure to only what may be necessary for the sender to respond, and all artifacts associated with the proposed action, including prompts and confirmations, may be sealed with authenticated encryption and/or may be tied to the session context. This end-to-end implementation may provide adaptive, risk-aware selection of actions, secure responses, and/or may deliver a consistent, secure user experience for the sender electronic device while maintaining strong auditability and compliance.

In some embodiments, identify method determination module 108 may apply a machine learning model that determines weights applied to one or more verification methods based on the input recipient information and/or the sender. For example, for recipient information of a phone number, one or more weights may be assigned to a response by the recipient based on response time, match of recipient information received from the sender (e.g., name, address), etc. Further recipient verification techniques may be applied until the machine learning model achieves a confirmation threshold score and the transaction may be allowed or, on the other hand, the confirmation threshold score is not met and the transaction may be prevented or blocked for a time period or in continuation until further verifications have been met. In some embodiments, identify method determination module 108 may take into account a time of day, an amount, a location of the sender electronic device, or another detail of the transaction to determine the confirmation threshold score.

In some embodiments, communication module 110 may communicate one or more verification techniques to a recipient. For example, communication module 110 may be configured to communicate over the Internet, SMS, voicemail, email, messenger, or through an application. Communication module 110 may communicate with a recipient electronic device 118 in order to verify the recipient. In some embodiments, communication module 110 may receive responses from recipient electronic device 118 and pass responses to testing verification module 112 and/or identity determination module 114. In some embodiments, recipient electronic device 118 may be the same device as the sender electronic device.

In some embodiments, testing verification module 112 may determine whether one or more tests were completed. Testing verification module 112 may update the confirmation threshold score based on which tests were or were not completed, the timeliness of a (e.g., each) test completion, the correctness/incorrectness of a (e.g., each test), and/or how many tests were completed.

In some embodiments, identity determination module 114 may determine whether responses from a recipient (e.g., through recipient electronic device) are sufficient to meet the confirmation threshold score through communication with identity method determination module 108. The identity determination module 114 may include a machine learning ("ML") model. In some embodiments, the ML model may apply various rules to a matching algorithm's output, where the matching algorithm compares sender-entered-information to recipient information received from one or more verification techniques, to determine matches versus non-matches based on similarity. The results of the comparison may be used to form the confirmation threshold score.

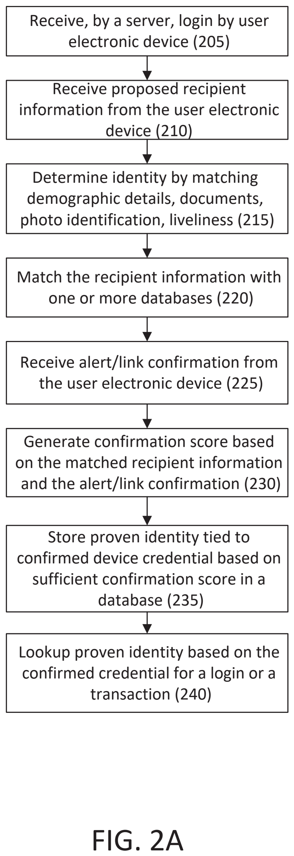

FIGs. 2A-2B are methods for identity proofing, in accordance with some embodiments. The method may be stored as a list of instructions stored on a memory that when executed by one or more processors cause the one or more processors to perform the method.

FIG. 2A illustrates a flowchart representing an identity confirmation process orchestrated by a server associated with a financial backend. At 205, the server may receive a login from a user electronic device. The login may establish a session and/or may associate the session with one or more confirmed device credentials, such as hardware-backed keys or application tokens. At 210, the server may receive proposed recipient information from the user electronic device. The proposed recipient information may include demographic details such as name, address, email address, and/or phone number, and may further include bank account routing data and/or other transaction-specific identifiers supplied via a user interface of a transaction application.

At 215, the server may determine an identity of a recipient by matching multiple categories of evidence comprising demographic details, documents, photo identification, and liveliness artifacts. The demographic details may be parsed and normalized to canonical formats; the documents may include a government-issued identification image or chip data obtained through contactless reading; the photo identification may yield a portrait for facial comparison; and/or the liveliness artifacts may include a short video or a series of challenge-response prompts that confirm the recipient is a live person rather than a replayed image and/or video. The determination at 215 may produce intermediate confidence values for an (e.g., each) evidence category.

At 220, the server may match the recipient information with one or more databases. The databases may include internal customer records, watchlists, sanctions lists, identity registries, and/or third-party data sources that provide verification signals such as phone number tenure, address validation, document issuance status, and device reputation. The matching may be performed using deterministic comparisons for exact fields and probabilistic linkage for partial or noisy data, and/or may update the intermediate confidence values.

At 225, the server may receive an alert or link confirmation from the user electronic device. In one embodiment, after the recipient evidence has been collected, an alert or link may be presented to the sender to confirm that the identity proofing request was initiated by the sender and that the identified recipient corresponds to the intended beneficiary. The sender may interact with the alert or link to acknowledge the recipient details, to approve continued verification, or to reject or modify the proposed recipient information. The server may record the sender's confirmation event and may bind it to the session and device credentials established at login.

At 230, the server may generate a confirmation score based on the matched recipient information and the alert or link confirmation. The confirmation score may be computed from weighted features including evidence category confidences, database match results, fraud risk signals, and the presence or absence of the sender's confirmation. The score may be normalized to a predetermined scale and may be compared to one or more thresholds that correspond to actions such as automatic approval, conditional approval with additional checks, and/or rejection.

At 235, the server may store a proven identity tied to the confirmed device credential in a database based on the confirmation score satisfying a sufficiency criterion. The proven identity record may include a unique recipient profile identifier, the normalized demographic details, document metadata, biometric comparison results, timestamps, geolocation indicators, and/or cryptographic hashes of artifacts. The record may be signed and appended to a tamper-evident audit log and may be associated with the sender's confirmed device credential to support reuse in subsequent sessions or transactions.

At 240, the server may perform a lookup of the proven identity based on the confirmed credential for a login or for a transaction. When the sender subsequently logs in or initiates a transaction, the server may resolve the confirmed device credential to the previously stored proven identity record and may surface the recipient profile for streamlined approval, reduced verification friction, and/or automatic population of recipient details. The lookup may apply validity windows, revocation checks, and periodic revalidation policies to ensure ongoing integrity of the proven identity before the transaction is authorized.

The sequence depicted in FIG. 2A may be executed in whole or in part depending on context. The steps may be performed in the illustrated order or in a different order, and steps may be repeated, skipped, or executed in parallel as conditions warrant. The process may improve security by combining sender confirmation with multi-source identity verification, may enhance privacy by storing normalized and hashed artifacts with auditability, and may reduce latency in future interactions through credential-bound identity reuse.

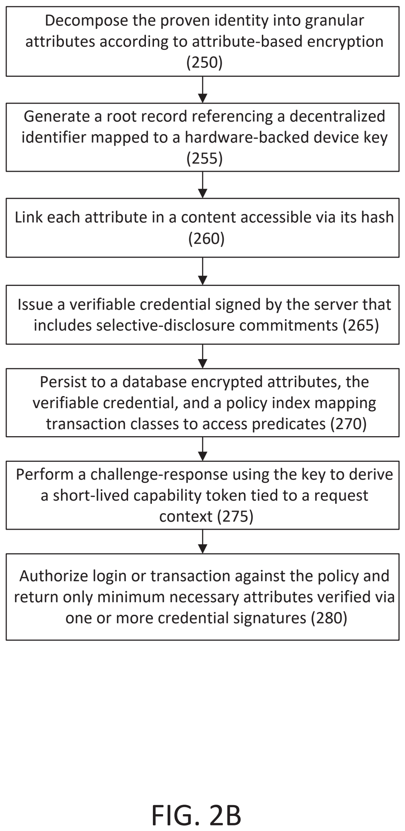

FIG. 2B illustrates a server-orchestrated identity verification and authorization workflow that decomposes a proven identity into granular, policy-controlled attributes and enables selective disclosure for subsequent logins or transactions. The figure presents a sequence of operations performed by a financial backend that may interact with recipient devices and secure storage systems.

At 250, the server may decompose the proven identity into granular attributes according to an attribute-based encryption regime. The decomposition may separate elements such as legal name, date of birth, address, document metadata, biometric comparison scores, and risk indicators into individually addressable records. A (e.g., each) record may be encrypted under an access policy that specifies which parties or transaction classes may retrieve or verify the attribute, thereby enabling least-privilege exposure and minimizing unnecessary disclosure.

At 255, the server may generate a root record referencing a decentralized identifier that may be mapped to a hardware-backed device key. The root record may bind the recipient's reusable identity to a strong credential resident on the recipient device, for example a secure enclave key, a trusted platform module key, or a FIDO attested key. The decentralized identifier may provide a stable, privacy-preserving anchor that avoids reliance on mutable personal identifiers and supports interoperability across services.

At 260, the server may link an (e.g., each) attribute in content that is accessible via its cryptographic hash. In one embodiment, attributes may be stored as content-addressable objects, and links between objects may form a directed acyclic graph or Merkle structure that provides tamper evidence. Hash-based addressing may permit efficient deduplication, integrity checking, and compact proofs of inclusion when disclosing subsets of the identity.

At 265, the server may issue a verifiable credential signed by the server that includes selective-disclosure commitments. The verifiable credential may attest to the verification status of the identity and may embed cryptographic commitments (for example, using encrypted signatures) that allow presentation of only the minimum necessary fields (such as age over a threshold or residency in a specific jurisdiction) without revealing the underlying raw data. The signature may enable relying parties to validate the authenticity and integrity of disclosed attributes.

At 270, the server may persist to a database the encrypted attributes, the verifiable credential, and a policy index mapping transaction classes to access predicates. The policy index may define, for example, that low-value transfers require only name and account routing confirmation, while high-value or cross-border transactions require additional document metadata, risk scores, or sanction checks. Persistence may include timestamps, versioning, and revocation metadata to manage lifecycle events such as revalidation or expiration.

At 275, the server may perform a challenge-response using the device-bound key to derive a short-lived capability token tied to a request context. The challenge-response may bind authorization to parameters such as sender identifier, transaction identifier, time window, geofence, and policy class. The derived capability token may limit scope and duration, thereby reducing replay risk and/or improving containment if a token is intercepted.

At 280, the server may authorize a login or transaction against the policy and may return only minimum necessary attributes verified via one or more credential signatures. The authorization decision may evaluate the capability token, applicable policy predicates, credential validity, and attribute freshness. The response to the requesting application may include attestations or selectively disclosed fields sufficient to execute the operation, while sensitive artifacts may remain undisclosed. This selective disclosure may reduce bandwidth, processing overhead, and privacy exposure.

The sequence of method 200 in FIG. 2B may be executed in the illustrated order or in a different order, and steps may be combined, repeated, or performed in parallel depending on implementation particulars and regulatory requirements. The architecture may provide technical benefits including cryptographically enforced data minimization, device-bound identity reuse, tamper-evident storage through hash-linked content, interoperable verification via signed verifiable credentials, and granular policy control across heterogeneous transaction classes. Collectively, these mechanisms may improve security, auditability, and user experience by delivering only the attributes necessary for the (e.g., each) request while maintaining strong assurance of identity.

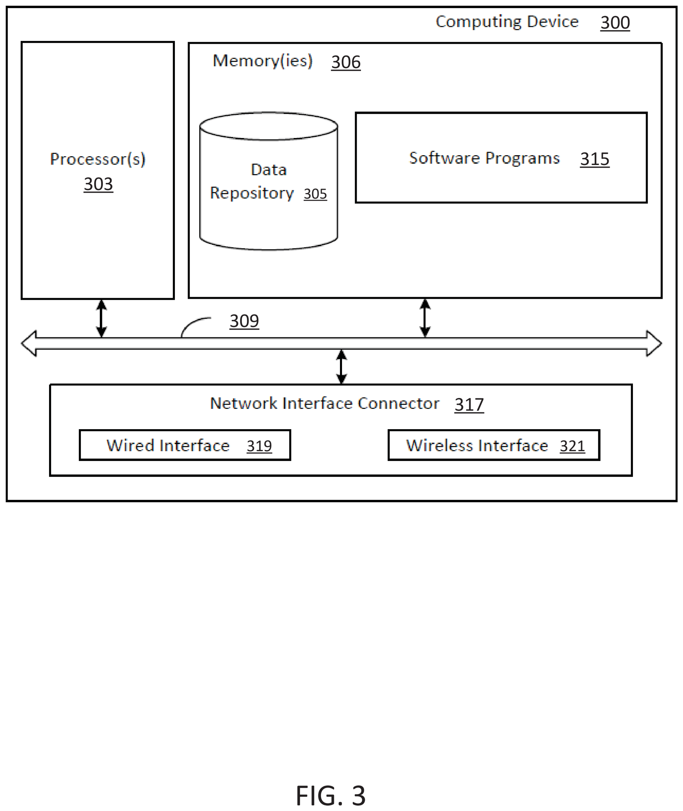

Figure 3 is a block diagram of a computing device for implementing certain Embodiments of the present disclosure. Figure 3 depicts exemplary computing device 300. Computing device 300 may represent hardware that executes the logic that drives the various system components described herein. For example, system components such as a user device, an interface, an event streaming platform, a matching algorithm, and various database/data store engines and servers, and other computer applications and logic may include, and/or execute on, components and configurations like, or similar to, computing device 300.

Computing device 300 includes a processor 303 coupled to a memory 306. Memory 306 may include volatile memory and/or persistent memory. The processor 303 executes computer-executable program code stored in memory 306, such as software programs 315. Software programs 315 may include one or more of the logical steps disclosed herein as a programmatic instruction, which can be executed by processor 303. Memory 306 may include data repository 305, which may be nonvolatile memory for data persistence. The processor 303 and the memory 306 may be coupled by a bus 309. In some examples, the bus 309 may be coupled to one or more network interface connectors 317, such as wired network interface 319, and/or wireless network interface 321. Computing device 300 may have user interface components, such as a screen for displaying graphical user interfaces and receiving input from the user, a mouse, a keyboard and/or other input/output components (not shown).

The various processing steps, logical steps, and/or data flows depicted in the figures and described in greater detail herein may be accomplished using some or all of the system components also described herein. In some implementations, the described logical steps may be performed in different sequences and various steps may be omitted. Additional steps may be performed along with some, or all of the steps shown in the depicted logical flow diagrams. Some steps may be performed simultaneously. Accordingly, the logical flows illustrated in the figures and described in greater detail herein are meant to be exemplary and, as such, should not be viewed as limiting. These logical flows may be implemented in the form of executable instructions stored on a machine-readable storage medium and executed by a processor and/or in the form of statically or dynamically programmed electronic circuitry.

The system of the disclosure or portions of the system of the disclosure may be in the form of a "processing machine" a "computing device," an "electronic device," a "mobile device," etc. These may be a computer, a computer server, a host machine, etc. As used herein, the term "processing machine," "computing device, "electronic device," or the like is to be understood to include at least one processor that uses at least one memory. The at least one memory stores a set of instructions. The instructions may be either permanently or temporarily stored in the memory or memories of the processing machine. The processor executes the instructions that are stored in the memory or memories in order to process data. The set of instructions may include various instructions that perform a particular step, steps, task, or tasks, such as those steps/tasks described above. Such a set of instructions for performing a particular task may be characterized herein as an application, computer application, program, software program, or simply software. In one aspect, the processing machine may be or include a specialized processor.

As noted above, the processing machine executes the instructions that are stored in the memory or memories to process data. This processing of data may be in response to commands by a user or users of the processing machine, in response to previous processing, in response to a request by another processing machine and/or any other input, for example. The processing machine used to implement the disclosure may utilize a suitable operating system, and instructions may come directly or indirectly from the operating system.

The processing machine used to implement the disclosure may be a general-purpose computer. However, the processing machine described above may utilize any of a wide variety of other technologies including a special purpose computer, a computer system including, for example, a microcomputer, minicomputer or mainframe, a programmed microprocessor, a micro-controller, a peripheral integrated circuit element, a CSIC (Customer Specific Integrated Circuit) or ASIC (Application Specific Integrated Circuit) or other integrated circuit, a logic circuit, a digital signal processor, a programmable logic device such as a FPGA, PLD, PLA or PAL, or any other device or arrangement of devices that is capable of implementing the steps of the processes of the disclosure.

It is appreciated that in order to practice the method of the disclosure as described above, it is not necessary that the processors and/or the memories of the processing machine be physically located in the same geographical place. That is, each of the processors and the memories used by the processing machine may be located in geographically distinct locations and connected so as to communicate in any suitable manner. Additionally, it is appreciated that each of the processor and/or the memory may be composed of different physical pieces of equipment. Accordingly, it is not necessary that the processor be one single piece of equipment in one location and that the memory be another single piece of equipment in another location. That is, it is contemplated that the processor may be two pieces of equipment in two different physical locations. The two distinct pieces of equipment may be connected in any suitable manner. Additionally, the memory may include two or more portions of memory in two or more physical locations.

To explain further, processing, as described above, is performed by various components and various memories. However, it is appreciated that the processing performed by two distinct components as described above may, in accordance with a further aspect of the disclosure, be performed by a single component. Further, the processing performed by one distinct component as described above may be performed by two distinct components. In a similar manner, the memory storage performed by two distinct memory portions as described above may, in accordance with a further aspect of the disclosure, be performed by a single memory portion. Further, the memory storage performed by one distinct memory portion as described above may be performed by two memory portions.

Further, various technologies may be used to provide communication between the various processors and/or memories, as well as to allow the processors and/or the memories of the disclosure to communicate with any other entity, i.e., so as to obtain further instructions or to access and use remote memory stores, for example. Such technologies used to provide such communication might include a network, the Internet, Intranet, Extranet, LAN, an Ethernet, wireless communication via cell tower or satellite, or any client server system that provides communication, for example. Such communications technologies may use any suitable protocol such as TCP/IP, UDP, or OSI, for example.

As described above, a set of instructions may be used in the processing of the disclosure. The set of instructions may be in the form of a program or software. The software may be in the form of system software or application software, for example. The software might also be in the form of a collection of separate programs, a program module within a larger program, or a portion of a program module, for example. The software used might also include modular programming in the form of object-oriented programming. The software tells the processing machine what to do with the data being processed.

Further, it is appreciated that the instructions or set of instructions used in the implementation and operation of the disclosure may be in a suitable form such that the processing machine may read the instructions. For example, the instructions that form a program may be in the form of a suitable programming language, which is converted to machine language or object code to allow the processor or processors to read the instructions. That is, written lines of programming code or source code, in a particular programming language, are converted to machine language using a compiler, assembler or interpreter. The machine language is binary coded machine instructions that are specific to a particular type of processing machine, i.e., to a particular type of computer, for example. The computer understands the machine language.

Any suitable programming language may be used in accordance with the various Embodiments of the disclosure. Illustratively, the programming language used may include assembly language, Ada, APL, Basic, C, C++, COBOL, dBase, Forth, Fortran, Java, Modula-2, Pascal, Prolog, REXX, Visual Basic, and/or JavaScript, for example. Further, it is not necessary that a single type of instruction or single programming language be utilized in conjunction with the operation of the system and method of the disclosure. Rather, any number of different programming languages may be utilized as is necessary and/or desirable.

Also, the instructions and/or data used in the practice of the disclosure may utilize any compression or encryption technique or algorithm, as may be desired. An encryption module might be used to encrypt data. Further, files or other data may be decrypted using a suitable decryption module, for example.

As described above, the disclosure may illustratively be embodied in the form of a processing machine, including a computer or computer system, for example, that includes at least one memory. It is to be appreciated that the set of instructions, i.e., the software for example, that enables the computer operating system to perform the operations described above may be contained on any of a wide variety of media or medium, as desired. Further, the data that is processed by the set of instructions might also be contained on any of a wide variety of media or medium. That is, the particular medium, i.e., the memory in the processing machine, utilized to hold the set of instructions and/or the data used in the disclosure may take on any of a variety of physical forms or transmissions, for example. Illustratively, the medium may be in the form of a compact disk, a DVD, an integrated circuit, a hard disk, a floppy disk, an optical disk, a magnetic tape, a RAM, a ROM, a PROM, an EPROM, a wire, a cable, a fiber, a communications channel, a satellite transmission, a memory card, a SIM card, or other remote transmission, as well as any other medium or source of data that may be read by a processor.

Further, the memory or memories used in the processing machine that implements the disclosure may be in any of a wide variety of forms to allow the memory to hold instructions, data, or other information, as is desired. Thus, the memory might be in the form of a database to hold data. The database might use any desired arrangement of files such as a flat file arrangement or a relational database arrangement, for example.

In the system and method of the disclosure, a variety of "user interfaces" may be utilized to allow a user to interface with the processing machine or machines that are used to implement the disclosure. As used herein, a user interface includes any hardware, software, or combination of hardware and software used by the processing machine that allows a user to interact with the processing machine. A user interface may be in the form of a dialogue screen for example. A user interface may also include any of a mouse, touch screen, keyboard, keypad, voice reader, voice recognizer, dialogue screen, menu box, list, checkbox, toggle switch, a pushbutton or any other device that allows a user to receive information regarding the operation of the processing machine as it processes a set of instructions and/or provides the processing machine with information. Accordingly, the user interface is any device that provides communication between a user and a processing machine. The information provided by the user to the processing machine through the user interface may be in the form of a command, a selection of data, or some other input, for example.

As discussed above, a user interface is utilized by the processing machine that performs a set of instructions such that the processing machine processes data for a user. The user interface is typically used by the processing machine for interacting with a user either to convey information or receive information from the user. However, it should be appreciated that in accordance with some Embodiments of the system and method of the disclosure, it is not necessary that a human user actually interact with a user interface used by the processing machine of the disclosure. Rather, it is also contemplated that the user interface of the disclosure might interact, i.e., convey and receive information, with another processing machine, rather than a human user. Accordingly, the other processing machine might be characterized as a user. Further, it is contemplated that a user interface utilized in the system and method of the disclosure may interact partially with another processing machine or processing machines, while also interacting partially with a human user.

It will be readily understood by those persons skilled in the art that the present disclosure is susceptible to broad utility and application. Many Embodiments and adaptations of the present disclosure other than those herein described, as well as many variations, modifications, and equivalent arrangements, will be apparent from or reasonably suggested by the present disclosure and foregoing description thereof, without departing from the substance or scope of the disclosure.

Accordingly, while the present disclosure has been described here in detail in relation to its exemplary Embodiments, it is to be understood that this disclosure is only illustrative and exemplary of the present disclosure and is made to provide an enabling disclosure of the disclosure. Accordingly, the foregoing disclosure is not intended to be construed or to limit the present disclosure or otherwise to exclude any other such Embodiments, adaptations, variations, modifications, or equivalent arrangements.

## Claims

1. A method comprising:
receiving, by a sender electronic device, a request and an identification for a transaction and one or more transaction details;
receiving, by a recipient electronic device, information details and the identification from the sender electronic device;
receiving, by the recipient electronic device and from the recipient, a liveliness check from the recipient;
providing, by a computer program executed by a financial backend, sender account details if an identity of the recipient is determined;
providing, by the computer program executed by the financial backend, a proposed action to the recipient electronic device;
selecting, by the recipient electronic device, the proposed action and providing the selected proposed action to the sender electronic device;
verifying, by the computer program executed by the financial backend, the identification based on the information details from the recipient electronic device and the liveliness check conducted by the sender electronic device; and
storing, by the computer program executed by the financial backend, the verified identity of the recipient on a memory accessible to the financial backend.

2. The method of claim 1, wherein receiving the identification from the recipient comprises capturing, via a camera of the sender electronic device, an image of a government-issued identification document and performing optical character recognition to extract one or more data fields including a name, a date of birth, a document number, and an expiration date.

3. The method of claim 1, wherein the liveliness check comprises recording a short video by the sender electronic device of one or more prompted gestures and analyzing the recorded video by the recipient electronic device using a trained convolutional neural network to detect presentation attacks including static images, replayed videos, and three-dimensional mask spoofs.

4. The method of claim 1, wherein verifying the identity of the sender comprises comparing the extracted data fields to records stored by the financial backend and performing facial matching between a portrait extracted from the identification document and one or more frames of the liveliness check, wherein the facial matching satisfies a similarity threshold.

5. The method of claim 1, wherein the sender electronic device comprises a mobile device executing a transaction application, and the request for the transaction comprises an input of an amount, a currency, and a sender identifier provided through a graphical user interface of the transaction application.

6. The method of claim 1, wherein the sender account details include at least a masked account number, an available balance, an estimated settlement time, and one or more transaction fees computed based on the transaction details.

7. The method of claim 1, wherein the proposed action to the recipient electronic device comprises at least one of approving the transaction, rejecting the transaction, modifying the transaction details, and requesting additional verification from the recipient, and wherein a graphical user interface of the sender electronic device presents a selected action based on the recipient electronic device determination based on the proposed action.

8. The method of claim 1, wherein storing the verified identity of the sender comprises generating a signed record including a timestamp, a geolocation associated with the recipient electronic device, and a cryptographic hash of artifacts comprising the identification image, the extracted data fields, and the liveliness check video, and appending the signed record to a tamper-evident audit log.

9. The method of claim 1, wherein communications between the sender electronic device, the recipient electronic device, and the financial backend are performed via a transport layer security channel, and the identification image and liveliness artifacts are encrypted using a public key associated with the financial backend prior to transmission.

10. The method of claim 1, further comprising computing a fraud risk score using a machine learning model executed by the recipient electronic device based on features including at least a device fingerprint of the sender electronic device, an internet protocol reputation score, velocity checks across historical transactions, and consistency of geolocation data, wherein the proposed action is selected based on the fraud risk score.

11. The method of claim 1, wherein receiving the identification from the recipient further comprises reading, via near field communication of the recipient electronic device, data from an embedded chip of an electronic passport and verifying a digital signature of the data using a public key infrastructure certificate chain.

12. The method of claim 1, wherein the liveliness check includes randomized challenge-response prompts generated by the financial backend and transmitted to the recipient electronic device to reduce susceptibility to replay attacks.

13. The method of claim 1, wherein verifying the identity of the recipient further comprises cross-validating the extracted data fields against third-party data sources and confirming a match within a predefined tolerance prior to storing the verified identity.

14. The method of claim 1, wherein storing the verified identity of the recipient comprises writing the signed record to an append-only storage system implemented using a distributed ledger or a write-once storage medium accessible to the financial backend.

15. The method of claim 1, wherein the computer program associates the verified identity with a unique recipient profile identifier and links the recipient profile identifier to subsequent transactions for a predetermined validity period during which the verification requirements are reduced.

16. A system comprising:
a sender electronic device configured to receive a request for a transaction and one or more transaction details and to provide an identification of a recipient;
a recipient electronic device configured to receive information details from the recipient, to receive an identification comprising a picture identification from the recipient, and to receive a liveliness check from the recipient; and
a financial backend comprising at least one processor and a memory storing instructions that, when executed by the at least one processor, cause the financial backend to provide sender account details if an identity of the recipient is determined, to provide a proposed action to the recipient, to verify an identity of the recipient based on the information details from the recipient and the liveliness check, and to store the verified identity of the recipient on a memory accessible to the financial backend.

17. The system of claim 16, wherein the financial backend is further configured to encrypt at least the identification and the liveliness check prior to transmission and to communicate with the sender electronic device and the recipient electronic device via a secure channel comprising transport layer security.

18. The system of claim 16, wherein storing the verified identity of the recipient comprises generating a signed record including a timestamp, a geolocation associated with the recipient electronic device, and a cryptographic hash of artifacts comprising the identification and the liveliness check, and appending the signed record to a tamper-evident audit log.

19. A non-transitory computer-readable storage medium storing instructions that, when executed by one or more processors of a financial backend, cause the financial backend to:
provide sender account details if an identity received from a sender electronic device is determined;
provide a proposed action to the sender electronic device;
verify the identity based on information details from the sender electronic device and a liveliness check executed by the sender electronic device; and
store a verified identity on a memory accessible to the financial backend, wherein the information details, the identification comprising a picture identification, and the liveliness check are received by a recipient electronic device, and a request for a transaction and one or more transaction details.

20. The non-transitory computer-readable storage medium of claim 19, wherein verifying the identity comprises performing facial matching between a portrait extracted from the picture identification and one or more frames of the liveliness check and confirming that a similarity threshold of the portrait compared to the one or more frames of the liveliness check is satisfied prior to storing the verified identity.
